# EUROPÄISCHE PATENTSCHRIFT

(11) **EP 3 179 661 B1**
(45) Veröffentlichungstag und Bekanntmachung des Hinweises auf die Patenterteilung: **10.07.2024**
(21) Anmeldenummer: 16202799.9
(22) Anmeldetag: 08.12.2016
(51) Int. Cl.: H04L 1/20, H04L 1/00

(54) **VERFAHREN ZUM BESTIMMEN EINER DATENÜBERTRAGUNGSGESCHWINDIGKEIT EINES TELEKOMMUNIKATIONSNETZES**
METHOD FOR DETERMINING A DATA TRANSMISSION SPEED OF A TELECOMMUNICATION NETWORK
PROCÉDÉ DE DÉTERMINATION DE LA VITESSE DE TRANSMISSION DE DONNÉES DANS UN RÉSEAU DE TÉLÉCOMMUNICATION

(30) Priorität: 10.12.2015 DE 102015121484
(43) Veröffentlichungstag der Anmeldung: 14.06.2017
(73) Patentinhaber: Accenture Global Solutions Limited, Dublin 4, D04 EE70 (IE)
(72) Erfinder: Wennesheimer, Michael, 47877 Willich (DE); Klüber, Ralf, 40668 Meerbusch (DE)
(74) Vertreter: Boult Wade Tennant LLP

(56) Entgegenhaltungen:
- US-A1- 2013 084 809

## Beschreibung

Die Erfindung betrifft ein Verfahren zum Bestimmen einer Datenübertragungsgeschwindigkeit eines Telekommunikationsnetzes, mit wenigstens einem mobilen Endgerät und einem Server, aufweisend die Schritte: Installieren und Starten einer Mess-Applikation auf dem Endgerät, Installieren und Starten einer Anwendungs-Applikation auf dem Endgerät, welche im Betrieb Daten zwischen dem Endgerät und dem Telekommunikationsnetz überträgt, und Ermitteln einer Messfolge umfassend eine Mehrzahl einzelner Messwerte eines zeitlichen Verlaufs der durch die Anwendungs-Applikation bewirkten Datenübertragung.

Zur Qualitätssicherung und Optimierung von Telekommunikationsnetzen ist es aus dem Stand der Technik bekannt, von einem Endgerät wiederholt Sprach- und/oder Datenverbindungen zu unterschiedlichen Zielen aufzubauen, um dann, beispielsweise anhand der gemessenen Gesprächsaufbauzeit oder Geschwindigkeit einer Internetverbindung, Rückschlüsse auf die Qualität des benutzen Telekommunikationsnetzes zu ziehen. Um die Messungen dabei möglichst realitätsnah zu gestalten, werden für Endverbraucher erwerbbare Endgeräte, beispielsweise Mobiltelefone, eingesetzt.

Zum Bestimmen der Qualität eines Mobilfunknetzes werden seit einigen Jahren sogenannte "drive tests" mit Messfahrzeugen durchgeführt, bei denen entlang einer vorgegebenen Fahrtroute wiederholte Messungen durchgeführt werden. In dem Messfahrzeug sind eine Mehrzahl Mobiltelefone angeordnet, die, um möglichst vergleichbare Bedingungen für unterschiedliche Netzbetreiber zu schaffen, mit externen, außerhalb des Messfahrzeugs angeordneten Antennen versehen sind. Derartige Antennen sind beispielsweise in einer Dachbox des Messfahrzeugs installiert und mittels eines Koaxialkabels mit dem Mobiltelefon verbunden. Eine in dem Messfahrzeug vorgesehene computerbasierte Steuerung lässt die Mobiltelefone wiederholt Sprach- und/oder Datenverbindungen aufbauen und zeichnet die Qualität des benutzen Mobilfunknetzes auf.

Auch wenn sich derartige "drive tests" aufgrund der qualitativ hochwertigen Messergebnisse fest etabliert haben, ist der damit verbundene Aufwand nicht gering. Messungen können nur dann durchgeführt werden, wenn die speziellen Messfahrzeuge aufgesetzt sind und zudem können die Messungen auch nur auf Straßen durchgeführt werden. Zwar existieren mobile Messeinheiten mit einer computerbasierter Steuerung und einer Mehrzahl Mobiltelefonen, beispielsweise um in Zügen Messungen durchzuführen, jedoch können auch diese Messungen nur dann durchführt werden, wenn die mobilen Messeinheiten durch dedizierte Tester betrieben werden.

US 2013/084809 A1 beschreibt ein Verfahren zur Durchsatz- und Datenvolumenmessung zur Minimierung von Drive-Tests.

Ausgehend von dieser Situation ist es eine Aufgabe der Erfindung, eine Möglichkeit anzugeben, um die Qualität eines Telekommunikationsnetzes in wesentlich einfacherer und flexiblerer Weise zu bestimmen.

Die Lösung der Aufgabe erfolgt durch die Merkmale des unabhängigen Anspruchs. Vorteilhafte Ausgestaltungen sind in den Unteransprüchen angegeben.

Demnach erfolgt die Lösung der Aufgabe durch ein Verfahren zum Bestimmen einer Datenübertragungsgeschwindigkeit eines Telekommunikationsnetzes, mit wenigstens einem mobilen Endgerät und einem Server, aufweisend die Schritte:
a) Installieren und Starten einer Mess-Applikation auf dem Endgerät zum Ausführen wenigstens der Schritte c) und e),
b) Installieren und Starten einer Anwendungs-Applikation auf dem Endgerät, welche im Betrieb Daten zwischen dem Endgerät und dem Telekommunikationsnetz überträgt,
c) Ermitteln einer Messfolge umfassend eine Mehrzahl einzelner Messwerte eines zeitlichen Verlaufs der durch die Anwendungs-Applikation bewirkten Datenübertragung,
e) Übertragen der Messfolge an den Server durch das Endgerät,
f) Installieren und Starten einer Analyse-Software auf dem Server zum Ausführen wenigstens der Schritte g) und i).
g) Ermitteln aus der Messfolge wenigstens einen Datenblock umfassend wenigstens einen erfassten Messwert durch die Analyse-Software derart, dass der Datenblock eine kontinuierliche Datenübertragungsrate > 0 kbit/s aufweist und während einer Zeitspanne ≥ 2 Sekunden anschließend an den Datenblock eine anschließende Datenübertragungsrate unter der kontinuierlichen Datenübertragungsrate liegt, und
i) Ermitteln aus dem Datenblock eine Zeitspanne zum Übertragen eines definierten Datenvolumens und/oder ein Datenvolumen zum Übertragen in einer definierten Zeitspanne als Datenübertragungsgeschwindigkeit des Telekommunikationsnetzes durch die Analyse-Software.

Die Erfindung geht damit einen ganz neuen Weg, indem zum Bestimmen der Datenübertragungsgeschwindigkeit und damit Qualität des Telekommunikationsnetzes weder ein Messfahrzeug noch eine mobile Messeinheit benötigt werden. Stattdessen kann beispielsweise ein herkömmliches Smartphone als Endgerät benutzt werden, wodurch das Verfahren in einfacher Weise ausführbar ist. Auf dem Smartphone wird die Mess-Applikation installiert, durch welche während einer regulären Nutzung der ebenso auf dem Smartphone installierten Anwendungs-Applikation die Datenübertragungsgeschwindigkeit des Telekommunikationsnetzes bestimmbar ist. Insofern erlaubt das vorgeschlagene Verfahren das Bestimmen der Datenübertragungsgeschwindigkeit eines Telekommunikationsnetzes auch unabhängig davon, ob ein Messfahrzeug oder eine mobile Messeinheit in Betrieb ist sowie auch abseits von durch das Messfahrzeug befahrbaren Straßen.

Sofern in bevorzugter Ausgestaltung eine Mehrzahl Endgeräte mit jeweiliger Mess-Applikation vorgesehen sind, können eine Vielzahl Messfolgen an unterschiedlichen Orten erfasst werden, so dass der Datenübertragungsgeschwindigkeit des Telekommunikationsnetzes wesentlich flächendeckender und qualitativ besser bestimmbar ist. Derart ermöglicht das Verfahren ein "crowd-sourcing", wodurch sich die Qualität eines Telekommunikationsnetzes wesentlich kostengünstiger bestimmen lässt. In besonders vorteiliger Weise benötigt das Verfahren keine manuelle Interaktion eines Bedieners und kann wenigstens hinsichtlich des Schrittes c) automatisiert im Hintergrund auf dem Endgerät ablaufen.

Im Gegensatz zu aus dem Stand der Technik bekannten "speed test" Verfahren, bei denen zum Bestimmen der Datenübertragungsgeschwindigkeit künstliche Testdaten zwischen dem Endgerät und dem Telekommunikationsnetz übertragen werden, zeichnet sich das vorgeschlagene Verfahren auch dadurch aus, dass keine derartigen Testdaten generiert werden müssen. Entsprechend entstehen durch das Verfahren auch keine Mehrkosten für das Übertragen der ansonsten notwendigen Testdaten. Ein Benutzerverhalten hat in ebenso vorteilhafter Weise keinen Einfluss auf die Ausführung des Verfahrens. Da eine Aufwertung der Messfolge in den Schritten g) und i) auf dem Server geschieht, benötigt die Mess-Applikation auf dem Endgerät nur sehr wenig CPU-Re chenleistung. Im Ergebnis lassen sich durch das vorgeschlagene Verfahren in besonders einfacherer Weise Messwerte des zeitlichen Verlaufs der durch die Anwendungs-Applikation bewirkten Datenübertragung erfassen, aus denen die Datenübertragungsgeschwindigkeit des Telekommunikationsnetzes bestimmbar ist.

Die Mess-Applikation lässt sich bevorzugt aus einem sogenannten "appstore" durch Herunterladen aus dem Internet oder von einer Speicherkarte auf dem Endgerät installieren. Die Anwendungsapplikation kann beispielsweise ein Webbrowser, eine Messaging-Applikation wie WhatsApp oder Skype, ein Videoplayer oder ein Email-Programm sein, welches im Betrieb eine Daten zwischen dem Endgerät und dem Telekommunikationsnetz überträgt. Bevorzugt wird in Schritt c) in periodischen Zeitabständen, beispielsweise alle 0,5, 1, 2, 5, 10, 30 oder 60 Sekunden, ein Messwert erfasst, der einem Datendurchsatz, also nur reine Nutzdaten, oder einer Datenübertragungsrate, also einschließlich eventueller Steuerdaten, zwischen dem Endgerät und dem Telekommunikationsnetz charakterisiert. Der Messwert kann einen Download bzw. Downstream und/oder einen Upload bzw. Upstream darstellen und wird typischerweise in der Einheit kbit/s bzw. kbps oder Mbit/s bzw. Mbps bestimmt. Die Messfolge umfasst bevorzugt alle ermittelten Messwerte und kann auf dem Endgerät in einer Datenbank zwischengespeichert werden, bevor in Schritt e) das Übertragen insbesondere durch die Mess-Applikation und in drahtloser oder drahtgebundener Weise und/oder via Internet an den Server erfolgt. Der Server ist bevorzugt an einer zentralen Stelle beispielsweise in einem Rechenzentrum angeordnet und mit dem Internet bzw. dem Telekommunikationsnetz verbunden.

In Schritt g) erfolgt eine Separierung der ermittelten Messwerte der Messfolge in wenigstens einen bzw. eine Mehrzahl einzelner Datenblöcke. Jeder Datenblock, auch "chunk" genannt, charakterisiert eine zeitliche begrenzte Datenübertragung zwischen dem Endgerät und Telekommunikationsnetz und weist derart über seinem zeitlichen Verlauf zwischen seinem Anfang und Ende eine durchgehende kontinuierliche Datenübertragungsrate > 0 kbit/s auf. Jeder Messwert des Datenblocks weist eine Datenübertragungsrate > 0 kbit/s auf. Nach dem Ende folgt während einer Zeitspanne ≥ 2 Sekunden nur wenigstens ein Messwert mit der anschließenden Datenübertragungsrate, die unter der kontinuierlichen Datenübertragungsrate liegt, also beispielsweise bei 0 kbit/s liegt. Zwischen zwei Datenblöcken liegen während der Zeitspanne ≥ 2 Sekunden beispielsweise eine Mehrzahl Messwerte mit nur 0 kbit/s, so dass also keine Daten zwischen Endgerät und Telekommunikationsnetz übertragen werden. Der Datenblock kann nur Messwerte für den Download, nur Messwerte für den Upload oder sowohl für den Download als auch für den Upload umfassen. Die kontinuierliche Datenübertragungsrate ist bevorzugt > 0, > 5, > 10 oder > 15 kbit/s und entsprechend ist die anschließende Datenübertragungsrate bevorzugt 0, ≤ 5, ≤ 10 respektive 15 ≤ kBits/s.

Schließlich werden in Schritt i) aus dem derart erhaltenen Datenblock die Zeitspanne zum Übertragen des definierten Datenvolumens und/oder das Datenvolumen zum Übertragen in der definierten Zeitspanne als Datenübertragungsgeschwindigkeit des Telekommunikationsnetzes durch die Analyse-Software bestimmt. Bei einer Mehrzahl von Datenblöcken erfolgt das Bestimmen bevorzugt aus der Mehrzahl der Datenblöcke, beispielsweise durch eine Mittelung der jeweils bestimmten Zeitspannen zum Übertragen des definierten Datenvolumens und/oder der Datenvolumen zum Übertragen in der definierten Zeitspanne.

Nach einer bevorzugten Weiterbildung umfasst das Verfahren den Schritt:
d) Ermitteln eines Endgerätetyps durch die Mess-Applikation, insbesondere aus den ersten acht Ziffern der International Mobile Equipment Identity-Seriennummer des Endgerätes, und in Schritt e) Übertragen des Endgerätetyps an den Server durch das Endgerät, und/oder
h) Unterteilen des wenigstens einen Datenblocks in Abschnitte definierter Länge, insbesondere 5 Sekunden Länge, durch die Analyse-Software, und
i`) Ermitteln aus dem Abschnitt der Zeitspanne zum Übertragen des definierten Datenvolumens und/oder das Datenvolumen zum Übertragen in der definierten Zeitspanne als Datenübertragungsgeschwindigkeit des Telekommunikationsnetzes durch die Analyse-Software.

Durch Ermitteln des Endgerätetyps lässt sich in einfacher Weise eine mögliche typbedingte maximale Datenübertragungsrate des zum Ausführen des Verfahrens benötigten Endgerätes feststellen. Besonders vorteilig erfolgt eine Identifikation des Endgerätes anhand der International Mobile Equipment Identity, IMEI. Die IMEI ist eine eindeutige 15-stellige Seriennummer, anhand derer jedes GSM-, UMTS- und LTE-Endgerät weltweit eindeutig identifiziert werden kann. Mittels der Analyse-Software lässt sich beispielsweise durch Abfrage einer Datenbank feststellen, welche maximale Datenübertragungsrate der ermittelte Endgerätetyp aufweist. Bevorzugt beträgt die Länge in Schritt h) 3, 4 oder 5 Sekunden und/oder beim Ermitteln in Schritt i') wird jeweils nur der erste Abschnitt des Datenblocks berücksichtigt.

Nach einer noch weiteren bevorzugten Ausgestaltung erfolgt das Ermitteln der Messfolge nur dann, wenn auf dem Endgerät die Anwendungs-Applikation Daten zwischen dem Endgerät und dem Telekommunikationsnetz überträgt, also beispielsweise wenn ein Benutzer mittels der Anwendungs-Applikation ein Internet-Video anschaut. Wenn keine Daten zwischen dem Endgerät und dem Telekommunikationsnetz übertragen werden, kann die Mess-Applikation in einen Ruhezustand übergehen. Sofern auf dem Endgerät eine Mehrzahl Anwendungs-Applikationen vorgesehen sind, erfolgt das Ermitteln der Messfolge bevorzugt nur dann, wenn wenigstens eine Anwendungs-Applikation Daten zwischen dem Endgerät und dem Telekommunikationsnetz überträgt.

In bevorzugter Weiterbildung werden durch die Analyse-Software aus der Messfolge eine Mehrzahl Datenblöcke umfassend jeweils eine Mehrzahl erfasster Messwerte ermittelt. In ganz besonders bevorzugter Weiterbildung erfolgt das Ermitteln des Datenblocks durch die Analyse-Software derart, dass während einer Zeitspanne ≥ 3 oder ≥ 4 Sekunden anschließend an den Datenblock eine anschließende Datenübertragungsrate unter der kontinuierlichen Datenübertragungsrate liegt oder keine Datenübertragung erfolgt. Die Zeitspanne kann ebenso ≥ 5, 8 oder 10 Sekunden betragen.

Nach einer anderen bevorzugten Ausgestaltung werden in Schritt c) beim Ermitteln der Messfolge und/oder beim Ermitteln in Schritt g) Bestätigungssignale des Telekommunikationsnetzes ausgenommen. Derartige Bestätigungsmeldungen, auch Acknowledgements oder abgekürzt ACK genannt, resultieren beispielsweise von der Übertragungsschicht des Telekommunikationsnetzes und können sowohl im Downstream als auch im Upstream vorkommen. Durch ein Entfernen der Bestätigungssignale lässt sich eine Netto-Datenübertragungsgeschwindigkeit ermitteln.

Grundsätzlich können der Datenblock, das definierte Datenvolumen und/oder die definierte Zeitspanne eine beliebige Größe aufweisen. Gemäß einer besonders bevorzugten Ausgestaltung umfasst ein Datenblock jedoch nicht mehr als 30 Minuten, umfasst das definierte Datenvolumen 2, 3 oder 4 MB und/oder umfasst die definierte Zeitspanne 2, 3 oder 4 Sekunden. Sofern beispielsweise die kontinuierliche Datenübertragungsrate mehr als 30 Minuten > 0 kbit/s ist, erfolgt eine Begrenzung des Datenblocks auf eine Länge von 30 Minuten. Praxistests haben ergeben, dass sich derart eine wesentliche genauere Datenübertragungsgeschwindigkeit bestimmen lässt. Ebenso haben sich Werte für definierte Datenvolumen von 3 oder 4 MB und definierte Zeitspannen von 2, 3 oder 4 Sekunden in Praxistests als sinnvoll erwiesen.

Für die Ausgestaltung des Endgerätes existieren ebenso verschiedene Möglichkeiten. Nach einer besonders bevorzugten Weiterbildung ist das Endgerät als Smartphone, als Handy oder als Tablet ausgestaltet. Bevorzugt ist das Endgerät einem Benutzer zugeordnet, der mittels der Anwendungs-Applikation Daten aus dem Internet abruft, während die Mess-Applikation den zeitlichen Verlaufs der durch die Anwendungs-Applikation bewirkten Datenübertragung ermittelt. In einer anderen bevorzugten Weiterbildung ist das Telekommunikationsnetz als Mobilfunknetz, insbesondere nach einem GSM, UMTS oder LTE-Standard, oder nach einem WiFi-Standard ausgestaltet, und/oder umfasst das Verfahren den Schritt g') Ermitteln aus der Messfolge den Datenblock derart, dass der Datenblock die kontinuierliche Datenübertragungsrate ≥ 10 kbit/s aufweist und während einer Zeitspanne ≥ 2 Sekunden anschließend an den kontinuierlichen Datenblock die Datenübertragungsrate < 10 kbit/s nicht übersteigt. Nach dieser Ausgestaltung liegt ein Schwellwert bei 10 kbit/s, ab dem Messwerte der Messfolge dem Datenblock zugeordnet werden. Ein Schwellwert von 10 kbit/s ist beispielsweise dann vorteilig, wenn im laufenden Betrieb Daten zwischen dem Endgerät und dem Telekommunikationsnetz ausgetauscht werden, die jedoch nicht durch die Anwendungs-Applikation hervorgerufen werden.

In einer besonders vorteiligen Weiterbildung werden in Schritt g) eine Mehrzahl Datenblöcke ermittelt und der Schritt i) umfasst zudem ein Anwenden einer statistischen Methode auf die Mehrzahl ermittelter Datenblöcke zum Ermitteln der Datenübertragungsgeschwindigkeit des Telekommunikationsnetzes, insbesondere zum Erhalten der Perzentile P10, P50, P90 und/oder Durchschnitt. Durch Perzentile, auch Prozentränge genannt, wird die Verteilung der erhaltenen Datenübertragungsgeschwindigkeit in 100 umfangsgleiche Teile zerlegt. Derart lassen sich aus einer Mehrzahl Datenblöcke beispielsweise Durchschnittswerte errechnen, die eine weitaus verlässlichere Bestimmung der Datenübertragungsgeschwindigkeit des Telekommunikationsnetzes ermöglichen.

Wie bereits erwähnt, kann durch den Endgerätetyp eine physikalische Begrenzung der Datenübertragungsgeschwindigkeit des Endgerätes gegeben sein. Um zu ermitteln, ob eine derartige Begrenzung vorliegt, umfasst das Verfahren nach einer bevorzugten Weiterbildung neben dem Schritt d) die durch die Analyse-Software ausgeführten Schritte: Ermitteln eines Perzentils P99 der Messwerte des Datenblocks, insbesondere nur für wenigstens einen Downstream-Datenblock und/oder einen Upstream-Datenblock, Abrufen einer Vergleichs-Übertragungsrate PMax des bestimmten Endgerätetyps aus einer Datenbank, und Prüfen, ob P99 > 0,95 * PMax und P99 ≤ PMax ist, zum Ermitteln einer Begrenzung der Datenübertragungsgeschwindigkeit durch den Endgerätetyp.

Experimentell hat sich gezeigt, dass durch den Vergleich, ob P99 > 0,95 * PMax und P99 ≤ PMax ist, in verlässlicher Weise bestimmbar ist, ob die ermittelte Datenübertragungsgeschwindigkeit für das Endgerät durch den Endgerätetyp oder durch das Telekommunikationsnetz begrenzt ist. Das Prüfungsergebnis lässt also erkennen, ob die ermittelte Datenübertragungsgeschwindigkeit des Telekommunikationsnetzes durch den Typ des Endgerätes physikalisch begrenzt oder ein valider Wert ist. Bevorzugt erfolgt das Ermitteln des Perzentils P99 für alle Messwerte des Datenblocks und/oder für alle Datenblöcke. Die Vergleichs-Übertragungsrate PMax wird bevorzugt anhand des Endgerätetyps bestimmt, insbesondere mittels der Schritte d) und e). Vorzugsweise umfasst das Ermitteln der Perzentile alle Messwerte insbesondere des Datenblocks bzw. aller Datenblöcke und/oder des Benutzers.

Eine weitere Begrenzung der Datenübertragungsgeschwindigkeit kann durch einen Tarif des Endgerätes gegeben sein. Beispielsweise kann der Tarif bei einem Mobilfunknetz eine Begrenzung auf GPRS- oder UMTS-Datenübertragungsgeschwindigkeit vorsehen, obwohl das Mobilfunknetz LTE- Datenübertragungsgeschwindigkeit erlauben würde. Um zu ermitteln, eine derartige Begrenzung vorliegt, umfasst das Verfahren nach einer bevorzugten Weiterbildung die durch die Analyse-Software ausgeführten Schritte: Ermitteln eines Perzentils P50 und P99 der Messwerte des Datenblocks, und Prüfen, ob 2 * P50 / P99 > 0,5 ist, zum Ermitteln einer Begrenzung der Datenübertragungsgeschwindigkeit durch einen Tarif. Praxistests haben ergeben, dass sich derart verlässlich bestimmen lässt, ob eine Begrenzung der Datenübertragungsgeschwindigkeit aufgrund des Tarifs erfolgt oder ob die ermittelte Datenübertragungsgeschwindigkeit ein valider Wert ist. Vorzugsweise umfasst das Ermitteln der Perzentils P50 und P99 alle Messwerte insbesondere des Datenblocks bzw. aller Datenblöcke und/oder des Benutzers.

Eine noch weitere Begrenzung der Datenübertragungsgeschwindigkeit kann durch die Anwendungs-Applikation gegeben sein. Beispielsweise existieren Anwendungs-Applikationen, die die Datenübertragung auf maximal 64 kbit/s begrenzen. Um zu ermitteln, ob eine derartige Begrenzung vorliegt, umfasst das Verfahren nach einer bevorzugten Weiterbildung die durch die Analyse-Software ausgeführten Schritte: Prüfen, ob bei einem Datenblock ein Quotient von Datenvolumen in Hauptübertragungsrichtung / Datenvolumen in Gegenrichtung > 5 ist, und bejahenfalls Prüfen für eine Benutzungsdauer der Anwendungs-Applikation, ob der Datenblock ≥ 4 Sekunden ist und der Quotient von Datenvolumen in Hauptübertragungsrichtung / Datenvolumen in Gegenrichtung > 10 ist, zum Ermitteln einer Begrenzung der Datenübertragungsgeschwindigkeit durch die Anwendungs-Applikation. Die Hauptübertragungsrichtung ist bevorzugt der Downstream, wobei ebenso der Upstream die Hauptübertragungsrichtung darstellen kann. Die Benutzungsdauer der Anwendungs-Applikation stellt bevorzugt eine komplette Session dar, während der die Anwendungs-Applikation Daten überträgt. Die Benutzungsdauer bzw. Session endet, wenn die Anwendungs-Applikation gewechselt oder beendet wird. Derart wird sichergestellt, dass keine "Conversational"-Session stattfindet, wie beispielsweise ein Skype-call. Das Prüfungsergebnis lässt somit erkennen, ob die ermittelte Datenübertragungsgeschwindigkeit des Telekommunikationsnetzes durch die Anwendungs-Applikation begrenzt ist oder ein valider Wert ist.

Schließlich kann die Datenübertragungsgeschwindigkeit noch durch eine Volumenbegrenzung insbesondere des Tarifes gegeben sein. Bei einer Volumenbegrenzung beispielsweise bei einem Mobilfunktarif mit einem Inklusiv-Volumen, wird, wenn das Inklusiv-Volumen erschöpft ist, die Datenübertragungsrate auf einen niedrigeren Wert begrenzt. Um zu ermitteln, ob eine derartige Begrenzung vorliegt, umfasst das Verfahren nach einer bevorzugten Weiterbildung die durch die Analyse-Software ausgeführten Schritte: Ermitteln einer maximalen Datenübertragungsrate des Datenblocks, und Prüfen, ob innerhalb der letzten ≥ 36 Stunden die maximale Datenübertragungsrate wieder erreicht wurde, zum Ermitteln einer Begrenzung der Datenübertragungsgeschwindigkeit durch eine Volumenbegrenzung. Praxistests haben gezeigt, dass, wenn die maximale Datenübertragungsragte zuvor erreicht wurde, dann jedoch ≥ 36, 48 oder 72 Stunden später nicht mehr, mit hinreichender Sicherheit die Volumenbegrenzung eingetreten ist. Insofern wird durch das Prüfungsergebnis eine Aussage getroffen, ob die ermittelte Datenübertragungsgeschwindigkeit des Telekommunikationsnetzes durch eine Volumenbegrenzung beinflusst ist oder einen validen Wert darstellt.

Nach einer weiteren besonders bevorzugten Ausgestaltung ist eine Mehrzahl mobiler Endgeräte vorgesehen, auf denen jeweils wenigstens die Schritte a) bis e) ausgeführt werden. Durch die Mehrzahl Endgeräte lassen sich eine Mehrzahl Messfolgen und damit auch eine Mehrzahl Datenblöcke ermitteln, so dass eine wesentlich genauere Ermittlung der Datenübertragungsgeschwindigkeit des Telekommunikationsnetzes im Sinne eines "crowd-sourcing" möglich ist. In diesem Zusammenhang ist ferner bevorzugt, dass das Verfahren die weiteren Schritte Ermitteln eines jeweiligen Telekommunikationsnetzanbieters durch die Endgeräte, und in Schritt h) Ermitteln der Datenübertragungsgeschwindigkeit für den jeweiligen Telekommunikationsnetzanbieter umfasst. Sofern beispielsweise verschiedene Mobilfunknetze unterschiedlicher Anbieter existieren, lässt sich so für jeden einzelnen Anbieter die Datenübertragungsgeschwindigkeit bestimmen.

Nachfolgend wird die Erfindung unter Bezugnahme auf die anliegenden Zeichnungen anhand einer bevorzugten Ausführungsform näher erläutert.

Es zeigen:
- Fig. 1: ein mobiles Endgerät und einen Server zum Durchführen eines Verfahrens zum Bestimmen einer Datenübertragungsgeschwindigkeit eines Telekommunikationsnetzes nach einem bevorzugten Ausführungsbeispiel der Erfindung in einer schematischen Ansicht,
- Fig. 2: eine Mehrzahl einzelner Messwerte eines zeitlichen Verlaufs einer durch eine Anwendungs-Applikation bewirkten Datenübertragung des Verfahrens gemäß Fig. 1 in einer schematischen Ansicht,
- Fig. 3: aus den Messwerten gemäß Fig. 2 ermittelte Datenblöcke in einer schematischen Ansicht, und
- Fig. 4: die Datenblöcke aus Fig. 3 in einer weiteren schematischen Ansicht.

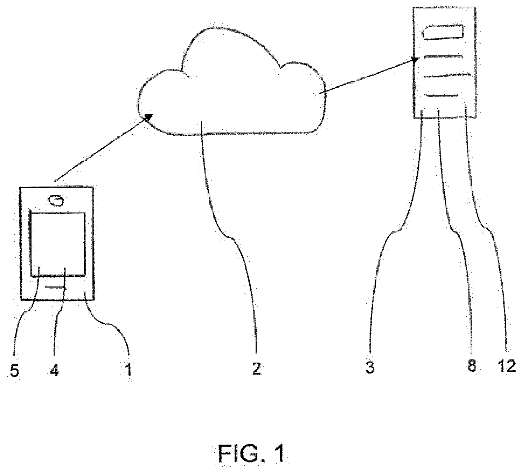

Fig. 1 zeigt ein mobiles Endgerät 1 und einen Server 2 zum Durchführen eines Verfahrens zum Bestimmen einer Datenübertragungsgeschwindigkeit eines Telekommunikationsnetzes 3 nach einem bevorzugten Ausführungsbeispiel der Erfindung in einer schematischen Ansicht. Das mobile Endgerät 1 ist als Smartphone ausgestaltet, auf dem einerseits in Schritt a) eine Messapplikation 4 zum Ausführen der nachfolgend beschriebenen Schritte c), d) und e) installiert und gestartet wird. In Schritt b) wird auf dem Endgerät 1 andererseits wenigstens eine Anwendungs-Applikation 5 installiert und gestartet. Die Anwendungs-Applikation 5 kann als Webbrowser, als Messaging-Programm, als Email-Client oder dergleichen ausgestaltet sein und übertragen im Betrieb Daten zwischen dem Endgerät 1 und dem Telekommunikationsnetz 2.

Der Server 3 ist in einem Rechenzentrum angeordnet und ist ebenso mit dem Telekommunikationsnetz 2 verbunden. Das Telekommunikationsnetz 2 ist als Mobilfunknetz nach einem GSM, UMTS oder LTE-Standard ausgestaltet, so dass zwischen dem Endgerät 1 und dem Server 3 Daten via TCP/IP austauschbar sind. Alternativ kann das Telekommunikationsnetz 2 nach einem WiFi-Standard ausgestaltet sein. Wenn auch nicht in Fig. 1 gezeigt, sind eine Mehrzahl Endgeräte 1 vorgesehen, auf denen jeweils die Messapplikation 4 und die Anwendungs-Applikation 5 installiert und gestartet sind, und die jeweils in Kommunikationsverbindung mit dem Telekommunikationsnetz 2 und dem Server 3 stehen. Die Endgeräte 1 sind unterschiedlichen Benutzern zugeordnet, die die Endgeräte 1 mit sich führen und via Anwendungs-Applikation 5 beispielsweise auf das Internet zugreifen

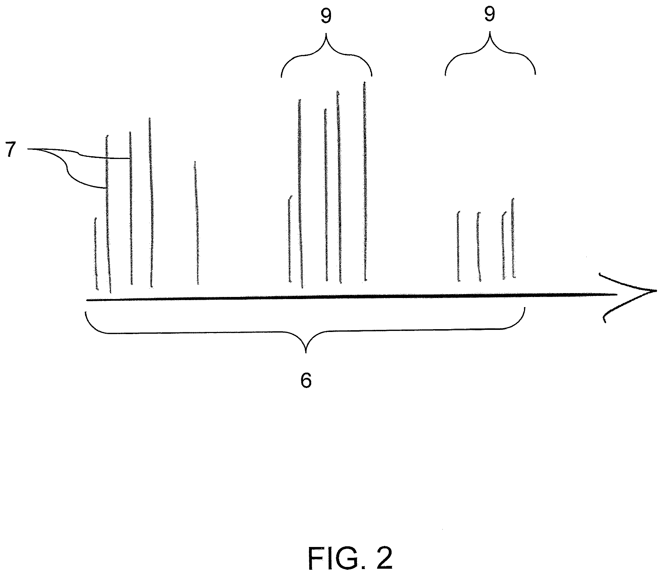

Unter Verweis auf Fig. 2 wird in Schritt c) durch die Messapplikation 4 eine Messfolge 6 umfassend eine Mehrzahl einzelner Messwerte 7 eines zeitlichen Verlaufs einer durch die Anwendungs-Applikation 5 bewirkten Datenübertragung dann ermittelt, wenn Daten zwischen Endgerät 1 und Telekommunikationsnetz 2 übertragen werden. Aufgetragen ist dazu in Fig. 2 als x-Achse der zeitliche Verlauf und als y-Achse die jede Sekunde ermittelten Messwerte 7 als Datenübertragung in kbit/s. Die Datenübertragung erfolgt beispielsweise dann, wenn der Benutzer via Anwendungs-Applikation 5 auf das Internet zugreift und ein Internetvideo ansieht. Dadurch werden aus dem Telekommunikationsnetz 2 Daten auf das Endgerät 1 übertragen.

Wie aus Fig. 2 als zeitliche Abfolge der Datenübertragung zu erkennen ist, folgt nach den ersten fünf Messwerten 7 > 0 kbit/s eine Pause, an die sich weitere fünf Messwerte 7 > 0 kbit/s anschließen, wonach wiederum eine Pause und vier weitere Messwerte 7 > 0 kbit/s folgen. Die Messwerte in den Pausen weisen 0 kbit/s auf, da keine Datenübertragung erfolgt. In Schritt d) wird aus den ersten acht Ziffern der International Mobile Equipment Identity-Seriennummer des Endgerätes 1 durch die Mess-Applikation 4 ein Endgerätetyp ermittelt. Die zuvor in Schritt c) ermittelte Messfolge 7 sowie der ermittelte Endgerätetyp werden in Schritt e) durch die Messapplikation 4 via Telekommunikationsnetz 2 an der Server 3 übertragen.

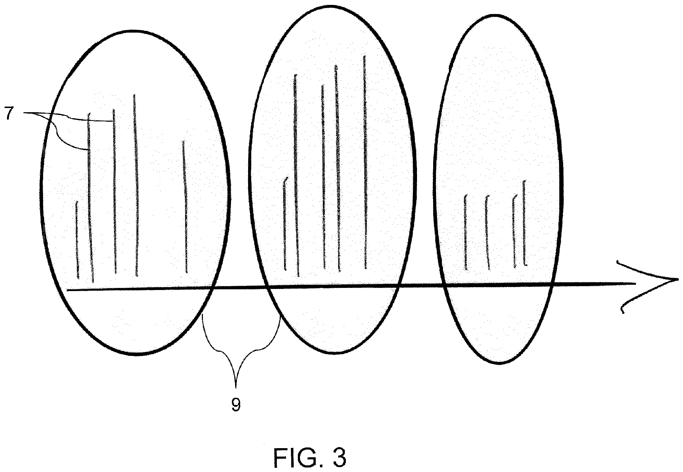

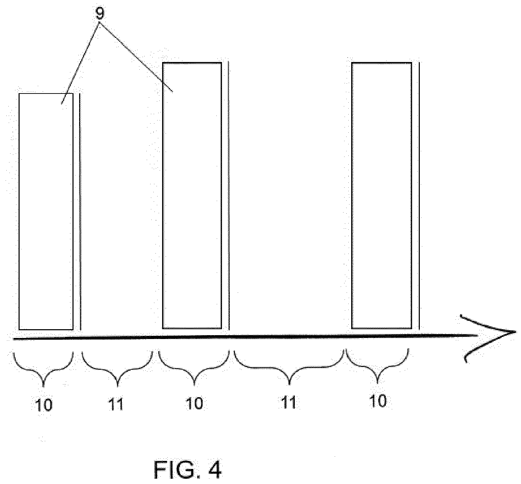

In Schritt f) wird auf dem Server 3 eine Analyse-Software 8 installiert und gestartet, mittels derer die nachfolgenden Schritte g), h) und i) ausgeführt werden. In Schritt g) wird durch die Analyse-Software 8 zunächst wenigstens einen Datenblock 9 umfassend wenigstens einen erfassten Messwert 7 aus der Messfolge 6 derart ermittelt, dass der Datenblock 9, wie aus Fig. 3 und Fig. 4 ersichtlich, eine kontinuierliche Datenübertragungsrate 10 > 0 kbit/s aufweist und während einer Zeitspanne ≥ 3 Sekunden anschließend an den Datenblock 9 eine anschließende Datenübertragungsrate 11 unter der kontinuierlichen Datenübertragungsrate liegt.

Das bedeutet, dass nach der kontinuierlichen Datenübertragungsrate 10, in der Daten mit einer Rate > 0 kbit/s zwischen dem Endgerät 1 und dem Telekommunikationsnetz 2 übertragen werden, eine Pause ≥ 3 Sekunden folgt, in der als anschließende Datenübertragungsrate 11 keine Daten übertragen werden. Sofern die kontinuierliche Datenübertragungsrate 10 länger als 30 Minuten ist, begrenzt die Analyse-Software 8 den Datenblock 9 auf 30 Minuten. Zurückkommend auf Fig. 3 stellen in zeitlicher Abfolge die ersten fünf Messwerte 7 den ersten Datenblock 9 dar, an den sich eine erste Pause anschließt. Insgesamt umfasst die exemplarisch in Fig. 3 und 4 dargestellte Messfolge 9 drei mittels des Schritts g) identifizierte Datenblöcke 9.

Schließlich bestimmt in Schritt i) die Analyse-Software 8 aus den ermittelten Datenblöcken 9 die Datenübertragungsgeschwindigkeit des Telekommunikationsnetzes 2 aus einer Zeitspanne zum Übertragen eines definierten Datenvolumens von 2 Mbyte und/oder aus einem Datenvolumen zum Übertragen in der definierten Zeitspanne von 4 Sekunden.

In einer alternativen Ausgestaltung werden durch die Analyse-Software 8 in Schritt h) die Datenblöcke 9 in Abschnitte definierter Länge von 4 Sekunden unterteilt, und in Schritt i') aus dem jeweils ersten Abschnitt, also den jeweils ersten 4 Sekunden jedes Datenblocks, die Zeitspanne zum Übertragen eines definierten Datenvolumens und/oder eines Datenvolumens zum Übertragen in einer definierten Zeitspanne als Datenübertragungsgeschwindigkeit des Telekommunikationsnetzes durch die Analyse-Software bestimmt.

Die bestimmte Datenübertragungsgeschwindigkeit kann aufgrund des Endgerätetyps, des Tarifes, der Anwendungs-Applikation 5 und/oder einer Volumenbegrenzung des Tarifes begrenzt sein, also im Ergebnis keinen repräsentativen Wert des Telekommunikationsnetzes 2 darstellen.

Um eine Begrenzung der Datenübertragungsgeschwindigkeit durch den Endgerätetyp zu ermitteln, wird zunächst durch die Analyse-Software 8 das Perzentil P99 der Messwerte 7 aller Datenblöcke 9 des Benutzers des Endgerätes 1 bestimmt, beispielsweise nur für wenigstens einen Downstream-Datenblock 9 und/oder einen Upstream-Datenblock 9. Nach Abrufen einer Vergleichs-Übertragungsrate PMax des bestimmten Endgerätetyps aus einer auf dem Server 3 vorgesehenen Datenbank 12 wird geprüft, ob P99 > 0,95 * PMax und P99 ≤ PMax ist. Bejahendenfalls liegt keine Begrenzung der Datenübertragungsgeschwindigkeit aufgrund des Endgerätetyps vor.

Ob der Tarif eine Begrenzung der Datenübertragungsgeschwindigkeit darstellt, lässt sich durch Ermitteln der Perzentile P50 und P99 der Messwerte 7 aller Datenblöcke 9 des Benutzers des Endgerätes 1, sowie nachfolgendem Prüfen, ob 2 * P50 / P99 > 0,5 ist, ermitteln. Eine Begrenzung der Datenübertragungsgeschwindigkeit durch die Anwendungs-Applikation 5 lässt sich durch Prüfen, ob bei einem Datenblock 9 ein Quotient von Datenvolumen in Hauptübertragungsrichtung / Datenvolumen in Gegenrichtung > 5 ist, und bejahenfalls durch Prüfen für eine Benutzungsdauer der Anwendungs-Applikation 5, ob der Datenblock 9 ≥ 4 Sekunden ist und der Quotient von Datenvolumen in Hauptübertragungsrichtung / Datenvolumen in Gegenrichtung > 10 ist, feststellen. Schließlich lässt sich durch Ermitteln einer maximalen Datenübertragungsrate des Datenblocks 9, und nachfolgendem Prüfen, ob innerhalb der letzten ≥ 36 Stunden die maximale Datenübertragungsrate wieder erreicht wurde, feststellen, ob eine Begrenzung der Datenübertragungsgeschwindigkeit durch eine Volumenbegrenzung vorliegt.

### Bezugszeichenliste

| | |
|---|---|
| Endgerät | 1 |
| Telekommunikationsnetz | 2 |
| Server | 3 |
| Mess-Applikation | 4 |
| Anwendungs-Applikation | 5 |
| Messfolge | 6 |
| Messwert | 7 |
| Analyse-Software | 8 |
| Datenblock | 9 |
| Kontinuierliche Datenübertragungsrate | 10 |
| Anschließende Datenübertragungsrate | 11 |
| Datenbank | 12 |

## Patentansprüche

1. Verfahren zum Bestimmen einer Datenübertragungsgeschwindigkeit eines Telekommunikationsnetzes (2), mit wenigstens einem mobilen Endgerät (1) und einem Server (3), aufweisend die Schritte:
a) Installieren und Starten einer Mess-Applikation (4) auf dem Endgerät (1), durch einen Benutzer, zum Ausführen der Schritte c) und d),
b) Installieren und Starten einer Anwendungs-Applikation (5) auf dem Endgerät (1), durch einen Benutzer, welche im Betrieb Daten zwischen dem Endgerät (1) und dem Telekommunikationsnetz (2) überträgt,
c) Ermitteln einer Messfolge (6) umfassend eine Mehrzahl einzelner Messwerte (7) eines zeitlichen Verlaufs der durch die Anwendungs-Applikation (5) bewirkten Datenübertragung durch die Mess-Applikation (4),
d) Übertragen der Messfolge (6) an den Server (3) durch das Endgerät (1) durch die Mess-Applikation (4),
e) Installieren und Starten einer Analyse-Software (8) auf dem Server (3) zum Ausführen wenigstens der Schritte f und g) durch den Benutzer,
f) Ermitteln aus der Messfolge (6) wenigstens einen Datenblock (9) umfassend wenigstens einen erfassten Messwert (7) durch die Analyse-Software (8) derart, dass der Datenblock (9) eine kontinuierliche Datenübertragungsrate (10) > 0 kbit/s aufweist und während einer Zeitspanne ≥ 2 Sekunden anschließend an den Datenblock (9) eine anschließende Datenübertragungsrate (11) unter der kontinuierlichen Datenübertragungsrate (10) liegt, und
g) Ermitteln aus dem Datenblock (9) eine Zeitspanne zum Übertragen eines definierten Datenvolumens und/oder ein Datenvolumen zum Übertragen in einer definierten Zeitspanne als Datenübertragungsgeschwindigkeit des Telekommunikationsnetzes (2) durch die Analyse-Software (8).

2. Verfahren nach dem vorhergehenden Anspruch, mit den Schritten:
c.1) Ermitteln eines Endgerätetyps durch die Mess-Applikation (4), insbesondere aus den ersten acht Ziffern der International Mobile Equipment Identity-Seriennummer des Endgerätes, und in Schritt d) Übertragen des Endgerätetyps an den Server (3) durch das Endgerät (1), und/oder
f.1) Unterteilen des wenigstens einen Datenblocks (9) in Abschnitte definierter Länge, insbesondere 5 Sekunden Länge, durch die Analyse-Software (8), und
g') Ermitteln aus dem Abschnitt die Zeitspanne zum Übertragen des definierten Datenvolumens und/oder das Datenvolumen zum Übertragen in der definierten Zeitspan- ne als Datenübertragungsgeschwindigkeit des Telekommunikationsnetzes (2) durch die Analyse-Software (8).

3. Verfahren nach einem der vorhergehenden Ansprüche, wobei das Ermitteln der Mess- folge (6) nur dann erfolgt, wenn auf dem Endgerät (1) die Anwendungs-Applikation (5) Daten zwischen dem Endgerät und dem Telekommunikationsnetz überträgt.

4. Verfahren nach einem der vorhergehenden Ansprüche, wobei das Ermitteln des Datenblocks (9) durch die Analyse-Software (8) derart erfolgt, dass während einer Zeitspanne ≥ 3 oder ≥ 4 Sekunden anschließend an den Datenblock (9) die anschließende Datenübertragungsrate (11) unter der kontinuierlichen Datenübertragungsrate (10) liegt oder keine Datenübertragung erfolgt.

5. Verfahren nach einem der vorhergehenden Ansprüche, wobei in Schritt c) beim Ermitteln der Messfolge (6) oder beim Ermitteln in Schritt f) Bestätigungssignale des Telekommunikationsnetzes (2) ausgenommen werden.

6. Verfahren nach einem der vorhergehenden Ansprüche, wobei ein Datenblock (9) nicht mehr als 30 Minuten umfasst, das definierte Datenvolumen 2, 3 oder 4 MB umfasst und/oder die definierte Zeitspanne 2, 3 oder 4 Sekunden umfasst.

7. Verfahren nach einem der vorhergehenden Ansprüche, wobei das Endgerät (1) als Smartphone, als Handy oder als Tablett ausgestaltet ist.

8. Verfahren nach einem der vorhergehenden Ansprüche, wobei das Telekommunikationsnetz (2) als Mobilfunknetz, insbesondere nach einem GSM, UMTS oder LTE- Standard, oder nach einem WiFi-Standard ausgestaltet ist, mit dem Schritt
'f.1) Ermitteln aus der Messfolge (6) den Datenblock (9) derart, dass der Datenblock (9) die kontinuierliche Datenübertragungsrate (10) ≥ 10 kbit/s aufweist und während einer Zeitspanne ≥ 2 Sekunden anschließend an die kontinuierliche Datenübertragungsrate (10) die anschließende Datenübertragungsrate (11) < 10 kbit/s ist.

9. Verfahren nach einem der vorhergehenden Ansprüche, wobei in Schritt 0 eine Mehrzahl Datenblöcke (9) ermittelt werden und der Schritt g) zudem umfasst: Anwenden einer statistischen Methode auf die Mehrzahl ermittelter Datenblöcke (9) zum Ermitteln der Datenübertragungsgeschwindigkeit des Telekommunikationsnetzes (2), insbesondere zum Erhalten der Perzentile P10, P50, P90 und/oder Durchschnitt.

10. Verfahren nach dem vorhergehenden Anspruch und Schritt d), mit den durch die Analyse-Software (8) ausgeführten Schritten:
Ermitteln eines Perzentils P99 der Messwerte (7) des Datenblocks (9), insbesondere nur für wenigstens einen Downstream-Datenblock (9) und/oder einen Upstream- Datenblock (9),
Abrufen einer Vergleichs-Übertragungsrate PMax des bestimmten Endgerätetyps aus einer Datenbank (12), und
Prüfen, ob P99 > 0,95 * PMax und P99 ≤ PMax ist, zum Ermitteln einer Begrenzung der Datenübertragungsgeschwindigkeit durch den Endgerätetyp.

11. Verfahren nach einem der beiden vorhergehenden Ansprüche, mit den durch die Analyse-Software (8) ausgeführten Schritten:
Ermitteln eines Perzentils P50 und P99 der Messwerte (7) des Datenblocks (9),
und
Prüfen, ob 2 * P50 / P99 > 0,5 ist, zum Ermitteln einer Begrenzung der Datenübertragungsgeschwindigkeit durch einen Tarif.

12. Verfahren nach einem der drei vorhergehenden Ansprüche, mit den durch die Analyse-Software (8) ausgeführten Schritten:
Prüfen, ob bei einem Datenblock (9) ein Quotient von Datenvolumen in Hauptübertragungsrichtung / Datenvolumen in Gegenrichtung > 5 ist, und bejahenfalls
Prüfen für eine Benutzungsdauer der Anwendungs-Applikation (5), ob der Datenblock ≥ 4 Sekunden ist und der Quotient von Datenvolumen in Hauptübertragungsrichtung / Datenvolumen in Gegenrichtung > 10 ist, zum Ermitteln einer Begrenzung der Datenübertragungsgeschwindigkeit durch die Anwendungs-Applikation (5).

13. Verfahren nach einem der vier vorhergehenden Ansprüche, mit den durch die Analyse-Software ausgeführten Schritten:
Ermitteln einer maximalen Datenübertragungsrate des Datenblocks (9), und
Prüfen, ob innerhalb der letzten ≥ 36 Stunden die maximale Datenübertragungsrate wieder erreicht wurde, zum Ermitteln einer Begrenzung der Datenübertragungsgeschwindigkeit durch eine Volumenbegrenzung.

14. Verfahren nach einem der vorhergehenden Ansprüche, mit einer Mehrzahl mobiler Endgeräte (1), auf denen jeweils wenigstens die Schritte a) bis d) ausgeführt werden.

15. Verfahren nach dem vorhergehenden Anspruch, mit dem Schritt:
Ermitteln eines jeweiligen Telekommunikationsnetzanbieters durch die Endgeräte (1), und
in Schritt g) Ermitteln der Datenübertragungsgeschwindigkeit für den jeweiligen Telekommunikationsnetzanbieter.

## Claims

1. Method for determining a data transfer rate of a telecommunications network (2) with at least one mobile terminal (1) and a server (3), having the steps:
a) installing and starting a measuring application (4) on the terminal (1) by a user, in order to carry out the steps c) and d),
b) installing and starting a user application (5) on the terminal (1) by a user which, during operation, transfers data between the terminal (1) and the telecommunications network (2),
c) ascertaining a measurement sequence (6) comprising a plurality of individual measurement values (7) of a process over time of the data transfer brought about by the user application (5), by the measuring application (4),
d) transferring the measurement sequence (6) to the server (3) by means of the terminal (1), by the measuring application (4),
e) installing and starting an analysis software (8) on the server (3) for carrying out at least the steps f) and g), by the user,
f) ascertaining from the measurement sequence (6) at least one data block (9) comprising at least one captured measurement value (7), by the analysis software (8) such that the data block (9) has a continuous data transfer rate (10) > 0 kbit/s and during a time span ≥ 2 seconds following the data block (9) a subsequent data transfer rate (11) is below the continuous data transfer rate (10), and
g) ascertaining from the data block (9) a time span for transferring a defined data volume and/or a data volume for transfer in a defined time span as the data transfer rate of the telecommunications network (2), by the analysis software (8).

2. Method according to the preceding claim, having the steps:
c.1) ascertaining a terminal type by the measuring application (4), in particular from the first eight digits of the International Mobile Equipment Identity Serial Number of the terminal and, in step d), transferring the terminal type to the server (3) by the terminal (1), and/or
f.1) subdividing the at least one data block (9) into portions of defined length, in particular 5 seconds length, by the analysis software (8), and
g') ascertaining from the portion the time span for transferring the defined data volume and/or a data volume for transferring in the defined time span as the data transfer rate of the telecommunications network (2), by the analysis software (8).

3. Method according to one of the preceding claims, wherein the ascertaining of the measurement sequence (6) only takes place when on the terminal (1) the user application (5) transfers data between the terminal and the telecommunications network.

4. Method according to one of the preceding claims, wherein the ascertaining of the data block (9) by the analysis software (8) takes place such that during a time span ≥ 3 or ≥ 4 seconds following the data block (9), the subsequent data transfer rate (11) is below the continuous data transfer rate (10) or no data transfer takes place.

5. Method according to one of the preceding claims wherein in step c), when the measurement sequence (6) is ascertained or during the ascertaining in step f), confirmation signals of the telecommunications network (2) are excluded.

6. Method according to one of the preceding claims, wherein a data block (9) comprises not more than 30 minutes, the defined data volume comprises 2, 3 or 4 MB and/or the defined time span comprises 2, 3 or 4 seconds.

7. Method according to one of the preceding claims, wherein the terminal (1) is configured as a smartphone, a cellular telephone or as a tablet.

8. Method according to one of the preceding claims, wherein the telecommunications network (2) is configured as a mobile radio network, in particular in accordance with a GSM, UMTS or LTE standard or according to a WiFi standard, having the step 'f.1) ascertaining the data block (9) from the measurement sequence (6) such that the data block (9) has the continuous data transfer rate (10) ≥ 10 kbit/s and during a time span ≥ 2 seconds following the continuous data transfer rate (10), the subsequent data transfer rate (11) is < 10 kbit/s.

9. Method according to one of the preceding claims, wherein in step 0, a plurality of data blocks (9) are ascertained and step g) further comprises: applying a statistical method to the plurality of ascertained data blocks (9) for ascertaining the data transfer rate of the telecommunications network (2), in particular for obtaining the percentiles P10, P50, P90 and/or an average.

10. Method according to the preceding claim and step d), having the steps carried out by the analysis software (8):
ascertaining a percentile P99 of the measurement values (7) of the data block (9), in particular only for at least one downstream data block (9) and/or an upstream data block (9),
retrieving a comparison transfer rate PMax of the determined terminal type from a database (12), and
checking whether P99 > 0.95 * PMax and P99 ≤ PMax, for ascertaining a limitation of the data transfer rate by the terminal type.

11. Method according to one of the two preceding claims, having the steps carried out by the analysis software (8):
ascertaining a percentile P50 and P99 of the measurement values (7) of the data block (9), and
checking whether 2 * P50 / P99 > 0.5, for ascertaining a limitation of the data transfer rate by a tariff.

12. Method according to one of the three preceding claims, having the steps carried out by the analysis software (8):
checking whether, for a data block (9), a quotient of the data volume in the main transfer direction / data volume in the contrary direction is > 5, and if so
checking for a use duration of the user application (5), whether the data block is ≥ 4 seconds and the quotient of the data volume in the main transfer direction / data volume in the contrary direction is > 10, for ascertaining a limitation of the data transfer rate by means of the user application (5).

13. Method according to one of the four preceding claims, having the steps carried out by the analysis software:
ascertaining a maximum data transfer rate of the data block (9), and
checking whether, within the last ≥ 36 hours, the maximum data transfer rate has been achieved again, in order to ascertain a limitation of the data transfer rate by means of a volume limitation.

14. Method according to one of the preceding claims, having a plurality of mobile terminals (1) on each of which at least the steps a) to d) are carried out.

15. Method according to the preceding claim, having the step:
ascertaining a telecommunications network provider, in each case, by the terminals (1), and
in step g) ascertaining the data transfer rate for the respective telecommunications network provider.

## Revendications

1. Procédé de définition d'une vitesse de transmission de données d'un réseau de télécommunication (2), avec au moins un terminal (1) mobile et un serveur (3), présentant les étapes :
a) d'installation et de démarrage d'une application de mesure (4) sur le terminal (1) par un utilisateur pour exécuter les étapes c) et d),
b) d'installation et de démarrage d'une application d'implémentation (5) sur le terminal (1) par un utilisateur, laquelle transmet en fonctionnement des données entre le terminal (1) et le réseau de télécommunication (2),
c) de détermination d'une séquence de mesure (6) comprenant une multitude de diverses valeurs de mesure (7) d'un intervalle de temps de la transmission de données, provoquée par l'application d'implémentation (5), par l'application de mesure (4),
d) de transmission de la séquence de mesure (6) au serveur (3) par le terminal (1) par l'application de mesure (4),
e) d'installation et de démarrage d'un logiciel d'analyse (8) sur le serveur (3) pour exécuter au moins les étapes f) et g) par l'utilisateur,
f) de détermination à partir de la séquence de mesure (6) d'au moins un bloc de données (9) comprenant au moins une valeur de mesure détectée (7) par le logiciel d'analyse (8) de telle manière que le bloc de données (9) présente un débit de transmission de données continu (10) > 0 kbit/s et un débit de transmission de données ultérieure (11) est inférieur au débit de transmission de données continu (10) dans un laps de temps ≥ 2 secondes après le bloc de données (9), et
g) de détermination à partir du bloc de données (9) d'un laps de temps pour transmettre un volume de données défini et/ou un volume de données pour le transfert dans un laps de temps défini en tant que vitesse de transmission de données du réseau de télécommunication (2) par le logiciel d'analyse (8).

2. Procédé selon la revendication précédente, avec les étapes :
c.1) de détermination d'un type de terminal par l'application de mesure (4), en particulier à partir des 8 premiers chiffres du numéro de série International Mobile Equipment Identity du terminal, et, à l'étape d), de transmission du type de terminal au serveur (3) par le terminal (1),
et/ou
f.1) de sous-division de l'au moins un bloc de données (9) en sections de longueur définie, en particulier d'une longueur de 5 secondes, par le logiciel d'analyse (8), et
g') de détermination à partir de la section du laps de temps pour transmettre le volume de données défini et/ou du volume de données pour la transmission dans le laps de temps défini en tant que vitesse de transmission de données du réseau de télécommunication (2) par le logiciel d'analyse (8) .

3. Procédé selon l'une quelconque des revendications précédentes, dans lequel la détermination de la séquence de mesure (6) est effectuée alors seulement lorsque l'application d'implémentation (5) transmet sur le terminal (1) des données entre le terminal et le réseau de télécommunication.

4. Procédé selon l'une quelconque des revendications précédentes, dans lequel la détermination du bloc de données (9) est effectuée par le logiciel d'analyse (8) de telle manière que pendant un laps de temps ≥ 3 ou ≥ 4 secondes, après le bloc de données (9), le débit de transmission de données ultérieur (11) est inférieur au débit de transmission de données continu (10) ou aucune transmission de données n'a lieu.

5. Procédé selon l'une quelconque des revendications précédentes, dans lequel dans l'étape c), des signaux d'actionnement du réseau de télécommunication (2) sont exclus lors de la détermination de la séquence de mesure (6) ou lors de la détermination dans l'étape f).

6. Procédé selon l'une quelconque des revendications précédentes, dans lequel un bloc de données (9) ne comprend pas plus de 30 minutes, le volume de données défini comprend 2, 3 ou 4 MB et/ou le laps de temps défini comprend 2, 3 ou 4 secondes.

7. Procédé selon l'une quelconque des revendications précédentes, dans lequel le terminal (1) est configuré en tant que téléphone intelligent, en tant que téléphone portable ou en tant que tablette.

8. Procédé selon l'une quelconque des revendications précédentes, dans lequel le réseau de télécommunication (2) est configuré en tant que réseau de téléphonie mobile, en particulier selon une norme GSM, UMTS ou LTE, ou selon une norme WiFi, avec l'étape
'f.1) de détermination à partir de la séquence de mesure (6) du bloc de données (9) de telle manière que le bloc de données (9) présente le débit de transmission de données continu (10) ≥ 10 kbit/s et le débit de transmission de données ultérieur (11) est < 10 kbit/s pendant un laps de temps ≥ 2 secondes après le débit de transmission de données continu (10).

9. Procédé selon l'une quelconque des revendications précédentes, dans lequel dans l'étape 0, une multitude de blocs de données (9) sont déterminés et l'étape g) comprend de plus : l'implémentation d'un procédé statistique sur la multitude de blocs de données (9) déterminés pour déterminer la vitesse de transmission de données du réseau de télécommunication (2), en particulier pour obtenir des percentiles P10, P50, P90 et/ou une moyenne.

10. Procédé selon la revendication précédente et l'étape d), avec les étapes exécutées par le logiciel d'analyse (8) :
de détermination d'un percentile P99 des valeurs de mesure (7) du bloc de données (9), en particulier seulement pour au moins un bloc de données en aval (9) et/ou un bloc de donnés en amont (9),
de consultation d'un débit de transmission de comparaison Pmax du type de terminal défini depuis une base de données (12), et
de vérification si P99 > 0,95 * Pmax et P99 ≤ Pmax pour déterminer une limite de la vitesse de transmission de données par le type de terminal.

11. Procédé selon l'une quelconque des deux revendications précédentes, avec les étapes exécutées par le logiciel d'analyse (8) :
de détermination d'un percentile P50 et P99 des valeurs de mesure (7) du bloc de données (9),
et
de vérification si 2 * P50/P99 est > 0,5 pour déterminer une limitation de la vitesse de transmission de données par un tarif.

12. Procédé selon l'une quelconque des trois revendications précédentes, avec les étapes exécutées par le logiciel d'analyse (8) :
de vérification si pour un bloc de données (9) un quotient du volume de données dans la direction de transmission principale / le volume de données dans la direction opposée est > 5, et dans ce cas,
de vérification pour une durée d'utilisation de l'application d'implémentation (5) si le bloc de données est ≥ 4 secondes et le quotient du volume de données dans la direction de transmission principale / le volume de données dans la direction opposée est > 10, pour déterminer une limitation de la vitesse de transmission de données par l'application d'implémentation (5).

13. Procédé selon l'une quelconque des quatre revendications précédentes, avec les étapes exécutées par le logiciel d'analyse :
de détermination d'un débit de transmission de données maximal du bloc de données (9), et
de vérification si au cours des dernières 36 heures ou plus le débit de transmission de données maximal a été à nouveau atteint pour déterminer une limitation de la vitesse de transmission de données par une limitation de volume.

14. Procédé selon l'une quelconque des revendications précédentes, avec une multitude de terminaux (1) mobiles, sur lesquels respectivement au moins les étapes a) à d) sont exécutées.

15. Procédé selon la revendication précédente, avec l'étape :
de détermination d'un fournisseur de réseau de télécommunication respectif par les terminaux (1)
et
dans l'étape g), de détermination de la vitesse de transmission de données pour le fournisseur de réseau de télécommunication respectif.
